# EUROPEAN PATENT SPECIFICATION

(11) **EP 2 439 014 B1**
(45) Date of publication and mention of the grant of the patent: **27.03.2019**
(21) Application number: 11184177.1
(22) Date of filing: 06.10.2011
(51) Int. Cl.: B23K 31/02, F22B 37/20

(54) **Dissimilar material joint structure**
Verbindungsstruktur aus ungleichen Materialien
Structure de joint de matériaux dissemblables

(30) Priority: 06.10.2010 JP 2010226960
(43) Date of publication of application: 11.04.2012
(73) Proprietor: Mitsubishi Heavy Industries, Ltd., Tokyo 108-8215 (JP)
(72) Inventor: Kitamura, Kosuke, TOKYO, 108-8215 (JP); Shimamura, Kengo, TOKYO, 108-8215 (JP); Nishida, Kenji, TOKYO, 108-8215 (JP); Nakajima, Nobutaka, TOKYO, 108-8215 (JP); Yamasaki, Masato, TOKYO, 108-8215 (JP); Kawasaki, Kenji, TOKYO, 108-8215 (JP)
(74) Representative: Intès, Didier Gérard André

(56) References cited:
- JP-A- 2005 344 321
- US-A1- 2009 020 273

## Description

### Field

The present invention relates to a dissimilar material joint structure for joining together dissimilar metal materials.

### Background

The steam generator that is used in a pressurized water reactor (PWR) has, for example, a plurality of U-shaped heat transfer tubes arrayed in a tubular core barrel. High-temperature and high-pressure primary cooling water is fed from the reactor to one end of the U-shaped heat transfer tubes. The heat transfer tubes transfer heat from the primary cooling water to secondary cooling water that is fed into the core barrel, and this secondary cooling water generates steam. The steam causes a turbine generator to rotate, thereby generating electricity. The primary cooling water that has undergone heat transfer is discharged from the other end of the U-shaped heat transfer tubes, and is returned to the reactor.

To prevent flow-induced vibrations in the U-shaped arc portions of the heat transfer tubes, the steam generator uses anti vibration bars. The anti vibration bars have roughly a V shape, and are inserted among the heat transfer tubes at the arc portion. The anti vibration bars are inserted among the heat transfer tubes from the bent portion side that is roughly in a V-shape. Both ends of the anti vibration bars protrude outwards from the arc portion of the outermost tube. Each end of the anti vibration bars is welded and coupled to a retaining bar. The retaining bar is welded to a retainer bar that is inserted between a heat transfer tube on the outermost periphery and a heat transfer tube on an inner side thereof. Consequently, the anti vibration bars are supported on the heat transfer tubes by the retaining bar.

However, in order to withstand the shocks that occur when suppressing the flow-induced vibrations from the heat transfer tubes, it is preferred that the anti vibration bars are formed from stainless steel (for example, SUS405). Further, it is preferred that the retaining bar be formed from a high nickel alloy (inconel 690) having excellent corrosion resistance in a high-temperature atmosphere. Consequently, an anti vibration bar and a retaining bar that are dissimilar metal materials need to be joined. Therefore, when joining the anti vibration bar and the retaining bar that are dissimilar metal materials are joined by welding, a thermal treatment is necessary, so that the welding operation takes time.

Patent Literature 1 discloses a reinforced frame as a dissimilar material joint structure for joining such dissimilar metal materials to each other. Since this metal frame has a plurality of reinforcing bars in a peripheral direction on the outer face of an annular reinforcing beam, a U-shaped clasp made from the same material as the reinforcing beam mates with the reinforcing bars, and then both ends of the U-shaped clasp are welded to the outer face of the reinforcing beam. Consequently, the reinforcing bars and the reinforcing beam can be joined without having to weld the reinforcing bars and the reinforcing beam, which are dissimilar metal materials. Patent Literature 2 discloses a joint structure as per the preamble of claim 1.

### Citation List

### Patent Literature

Patent Literature 1: Japanese Patent Application Laid-Open No. 2005-344321
Patent Literature 2: US 2009/020273

### Summary

### Technical Problem

However, the dissimilar material joint structure described in Patent Literature 1 cannot obtain a sufficient joint strength because the U-shaped clasp and the reinforcing bars are only mated with each other. Especially, this dissimilar material joint structure tends to suffer from insufficient joint strength as a joint structure for the purpose of preventing flow-induced vibrations in heat transfer tubes, such as an anti vibration bar in a steam generator.

The present invention resolves the above-described problems. It is an object of the present invention to provide a dissimilar material joint structure as defined in claim 1 that can improve the joint strength of dissimilar metal materials to each other.

According to an aspect of the present disclosure, in a dissimilar material joint structure that joins together a first member and a second member which is formed from a dissimilar metal material to the first member, the first member is sandwiched by a plurality of the second members, and the second members are joined together by welding.

According to this dissimilar material joint structure, due to contraction of the weld material welding the respective second members, the first member is sandwiched between one of the second members and the other second member, whereby the first member and the second members are joined. Consequently, a thermal treatment for welding dissimilar metal materials is not required, and the welding operation can be carried out easily. Moreover, the joint between the first member and the second members is achieved by the first member being sandwiched between one of the second members and the other second member due to contraction of the weld material. Therefore, the joint strength between the first member and the second members, which are dissimilar metal materials, can be improved.

Advantageously, in the dissimilar material joint structure, a mating portion that mates the first member with the second member is provided.

According to this dissimilar material joint structure, the joint between the first member and the second members by the mating with the mating portion can be made stronger.

According to an aspect of the present invention as defined in claim 1, a dissimilar material joint structure that joins together a plurality of anti vibration bars that are inserted among an array of a plurality of heat transfer tubes and retaining bars which are formed from a dissimilar metal material to the anti vibration bars and couples the anti vibration bars together, comprising a plurality of end caps that are formed from the same material as the retaining bar. A portion to be joined to the retaining bar on the anti vibration bar is sandwiched by the end caps, the respective end caps are welded together, and the end caps and the retaining bar are welded together.

According to this dissimilar material joint structure, due to contraction of the weld material welding the respective end caps, the anti vibration bar is sandwiched between one of the end caps and the other end cap, whereby the anti vibration bar and the end caps are joined. Then, the end caps and the retaining bar, which are the same metal material, are joined by welding in this state. Consequently, a thermal treatment for welding dissimilar metal materials is not required, and the welding operation can be carried out easily. Moreover, the joint between the anti vibration bar and the end caps is achieved by the anti vibration bar being sandwiched between one of the end caps and the other end cap due to contraction of the weld material. Therefore, the joint strength between the anti vibration bar and the retaining bar, which are dissimilar metal materials, can be improved.

Advantageously, in the dissimilar material joint structure, a mating portion that mutually mates the anti vibration bar with the retaining bar is provided.

According to this dissimilar material joint structure, the joint between the anti vibration bar and the end caps by the mating with the mating portion can be made stronger.

### Advantageous Effects of the Invention

According to the present invention, the joint strength between the dissimilar metal materials can be made stronger.

### Brief Description of Drawings

FIG. 1 is a sectional schematic side view of a steam generator in which a dissimilar material joint structure according to an embodiment of the present invention is applied.
FIG. 2 is a plan schematic view of a heat transfer tube bundle.
FIG. 3 is a cross-sectional view along the line A-A in FIG. 2.
FIG. 4 is a perspective schematic view of a heat transfer tube bundle.
FIG. 5 is a plan view illustrating a dissimilar material joint structure according to an embodiment of the present invention.
FIG. 6 is an enlarged cross-sectional view along the line B-B in FIG. 5.
FIG. 7 is a perspective view illustrating a dissimilar material joint structure according to an embodiment of the present invention.

### Description of Embodiments

An embodiment according to the present invention will now be described in more detail based on the drawings. It is noted that the present invention is not limited to this embodiment. Further, the constituent elements in the following embodiment encompass elements that are essentially the same or that could easily be substituted by a skilled person in the art.

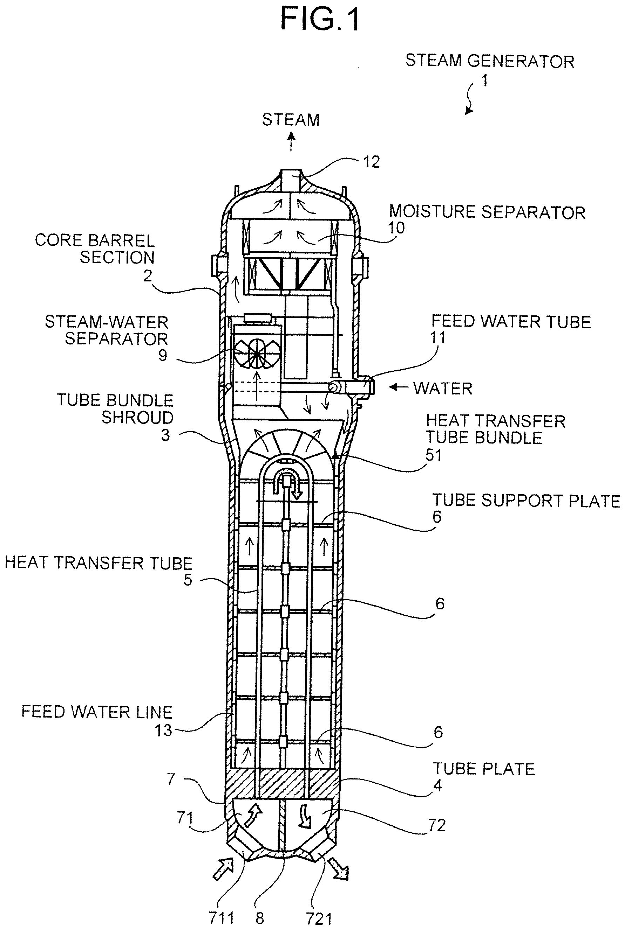

FIG. 1 is a sectional schematic side view of a steam generator in which a dissimilar material joint structure according to the present embodiment is applied. A steam generator 1 is used in, for example, a pressurized water reactor (PWR). A PWR uses light water as a reactor coolant and as a neutron moderator. A PWR feeds to the steam generator 1 primary cooling water as high-temperature and high-pressure water so that the light water does not boil throughout the reactor. In the steam generator 1, heat from the high-temperature and high-pressure primary cooling water is transferred to secondary cooling water, and this secondary cooling water generates steam. The steam causes a turbine generator to rotate, thereby generating electricity.

The steam generator 1 has a core barrel section 2 that is vertically elongated and forms a sealed hollow tubular shape. The lower half of the core barrel section 2 has a slightly smaller diameter than the upper half. A cylindrical tube bundle shroud 3 arranged at a predetermined interval from an inner wall face of the core barrel section 2 is provided in the lower half of the core barrel section 2. The lower end of this tube bundle shroud 3 extends as far as a tube plate 4 that is arranged below the lower half of the core barrel section 2. A heat transfer tube bundle 51 is provided in the tube bundle shroud 3. The heat transfer tube bundle 51 is formed from a plurality of heat transfer tubes 5 that have a reverse U-shape. Each of the heat transfer tubes 5 is arranged so that the U-shaped arc portion faces upwards. The lower end of the heat transfer tubes 5 is supported by the tube plate 4, and the middle section of the heat transfer tubes 5 is supported by the tube bundle shroud 3 via a plurality of tube support plates 6. The tube support plates 6 are formed with many (not illustrated) through holes, through which the respective heat transfer tubes 5 pass.

A water chamber 7 is provided at the bottom of the core barrel section 2. The interior of the water chamber 7 is divided by a partition wall 8 into an inlet chamber 71 and an outlet chamber 72. The inlet chamber 71 is in communication with one end of each heat transfer tube 5, and the outlet chamber 72 is in communication with the other end of each heat transfer tube 5. Further, an inlet nozzle 711 that connects to the outside of the core barrel section 2 is formed in the inlet chamber 71, and an outlet nozzle 721 that connects to the outside of the core barrel section 2 is formed in the outlet chamber 72. A (not illustrated) cooling water tube through which primary cooling water is fed from the PWR is connected to the inlet nozzle 711, and a (not illustrated) cooling water tube through which primary cooling water that has undergone heat transfer is fed to the PWR is connected to the outlet nozzle 721.

A steam-water separator 9 that separates the feed water into steam and hot water and a moisture separator 10 that reduces moisture from the separated steam so that the steam is close to a dry state are provided in the upper half of the core barrel section 2. A feed water tube 11 for feeding the secondary cooling water into the core barrel section 2 from outside is inserted between the steam-water separator 9 and the heat transfer tube bundle 51. Further, a steam vent 12 is formed on the upper end of the core barrel section 2. A feed water line 13 is formed in the lower half of the core barrel section 2 so that the secondary cooling water fed into the core barrel section 2 from the feed water tube 11 flows down between the core barrel section 2 and the tube bundle shroud 3, reverses course at the tube plate 4, and comes back up along the heat transfer tube bundle 51. A (not illustrated) cooling water tube for supplying steam to the turbine is connected to the steam vent 12. A (not illustrated) cooling water tube for feeding secondary cooling water that has been cooled by a (not illustrated) condenser that condenses the steam used by the turbine is connected to the feed water tube 11.

In such a steam generator 1, the primary cooling water heated by the PWR is fed to the inlet chamber 71, circulated by passing though the plurality of heat transfer tubes 5, and reaches the outlet chamber 72. On the other hand, the secondary cooling water cooled by the condenser is fed to the feed water tube 11, passes through the feed water line 13 in the core barrel section 2, and rises up along the heat transfer tube bundle 51. At this stage, heat transfer occurs between the high-temperature and high-pressure primary cooling water and the secondary cooling water in the core barrel section 2. Then, the cooled primary cooling water is returned to the PWR from the outlet chamber 72. On the other hand, the secondary cooling water that has undergone heat transfer with the high-temperature and high-pressure primary cooling water rises in the core barrel section 2, and is separated by the steam-water separator 9 into steam and hot water. The separated steam is supplied to the turbine after moisture is reduced by the moisture separator 10.

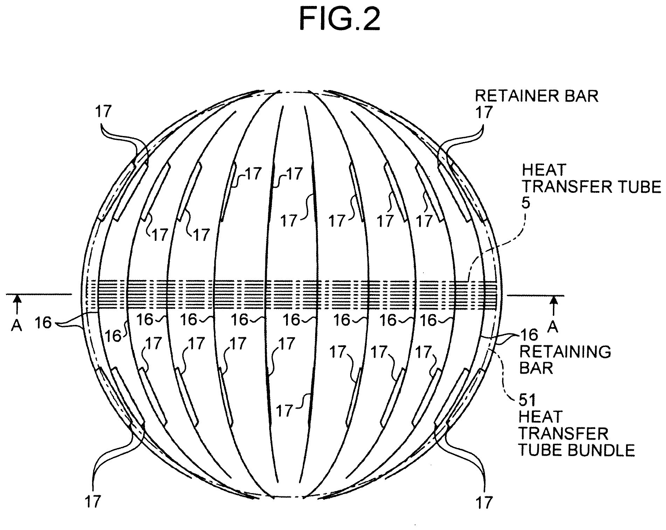

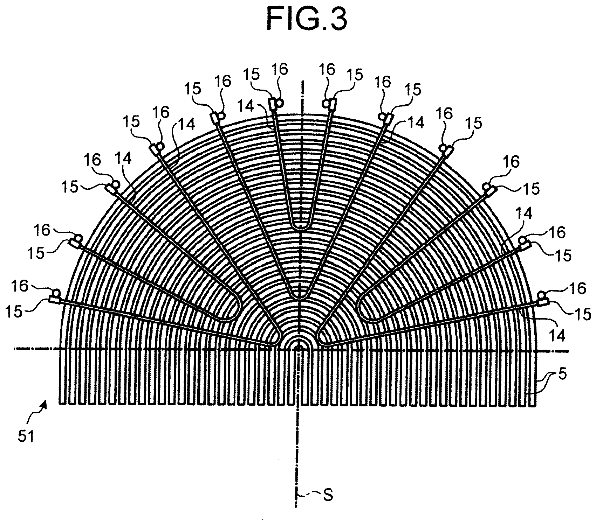

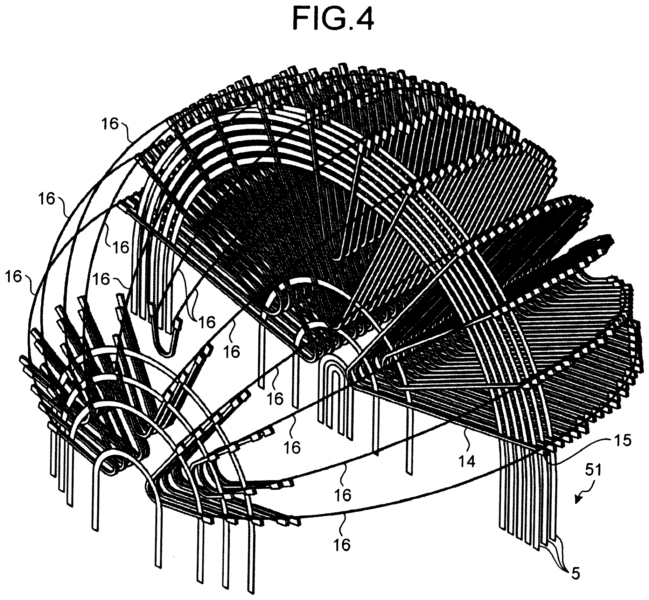

In the thus-configured steam generator 1, when the primary cooling water is passing through the respective heat transfer tubes 5, flow-induced vibrations occur at the reverse U-shaped arc portions. Therefore, anti vibration bars are provided on the arc portions of the heat transfer tubes 5. FIG. 2 is a plan schematic view of a heat transfer tube bundle. FIG. 3 is a cross-sectional view along the line A-A in FIG. 2. FIG. 4 is a perspective schematic view of a heat transfer tube bundle.

As described above, the reverse U-shaped arc portion of the heat transfer tubes 5 is arranged on the upper end of the heat transfer tube bundle 51. The heat transfer tubes 5 are arranged so that they form the upper end of the heat transfer tube bundle 51 in a semispherical shape, in which, as illustrated in FIG. 3, the heat transfer tubes 5 having a larger arc portion radius from a center S are arranged more toward the outside, and as illustrated in FIG. 2, the radius of this array varies with the heat transfer tubes 5 laterally stacked on top of each other.

As illustrated in FIG. 4, anti vibration bars 14 are inserted among the array of stacked heat transfer tubes 5. The anti vibration bars 14 have a rectangular cross section, and are bent in a roughly V shape. The bent portions of the anti vibration bars 14 are arranged at respective positions corresponding to the same diameter of the array of stacked heat transfer tubes 5 (predetermined positions). Both ends of the anti vibration bar 14 protrude outwardly from the arc portion of the heat transfer tubes 5 having the greatest diameter. The ends of the anti vibration bars 14 are arranged in a line that follows the arcs of the semispherical shape of the heat transfer tube bundle 51. Further, the anti vibration bars 14 are arranged in pairs each including an anti vibration bar having a large V shape and an anti vibration bar having a small V shape arranged on the inside of the anti vibration bar having a large V shape. Three of these pairs are arranged in the semicircle portion of the heat transfer tubes 5. The anti vibration bars 14 are formed from a metal material (for example, SUS 405) that is suited to suppressing vibrations in the heat transfer tubes 5. Further, end caps 15 are provided on both ends of the anti vibration bars 14 that outwardly protrude from the arc portion of the heat transfer tubes 5. This end cap 15 is formed from a metal material having excellent corrosion resistance in a high-temperature atmosphere (for example, inconel 690). This material is the same material as that of the below-described retaining bar 16.

As illustrated in FIGS. 2 to 4, the end caps 15 provided on the anti vibration bars 14 are welded to the retaining bar 16. The retaining bar 16 is formed from a metal material having excellent corrosion resistance in a high-temperature atmosphere (for example, inconel 690). The retaining bar 16 has a rod shape that is attached along the semispherical outer periphery of the heat transfer tube bundle 51. The retaining bar 16 is attached to the heat transfer tube bundle 51 by welding to both ends of a retainer bar 17, which has a shape roughly like a square U shape and is inserted between the heat transfer tube 5 on the outermost periphery and a heat transfer tube 5 on an inner side thereof. Thus, the anti vibration bars 14 are arranged in the heat transfer tube bundle 51 so as to be inserted at predetermined positions among the heat transfer tubes 5.

The above anti vibration bars 14 are formed from a metal material (for example, SUS 405) that is suited to suppressing vibrations in the heat transfer tubes 5. The retaining bars 16 for supporting the anti vibration bars 14 are formed from a metal material having excellent corrosion resistance in a high-temperature atmosphere (for example, inconel 690). More specifically, the anti vibration bars 14 and the retaining bars 16 are formed from respective dissimilar metal materials. Consequently, the anti vibration bars 14 and the retaining bars 16, which are formed from dissimilar metal materials, need to be joined. When joining a anti vibration bar 14 and a retaining bar 16, to prevent a joining part from dropping in the steam generator 1, for example, weld joining is more preferable than joining with a bolt. However, to join the anti vibration bar 14 and the retaining bar 16, which are formed from dissimilar metal materials, by welding, a thermal treatment is necessary, so that the welding operation takes time. Therefore, the end cap 15, which is formed from the same metal material as the retaining bar 16, is joined to the anti vibration bar 14, and then the end cap 15 and the retaining bar 16 are joined by welding. However, since the anti vibration bar (first member) 14 and the end cap (second member) 15 are dissimilar metal materials, when joining the anti vibration bar 14 and the end cap 15 to each other, the following techniques are used.

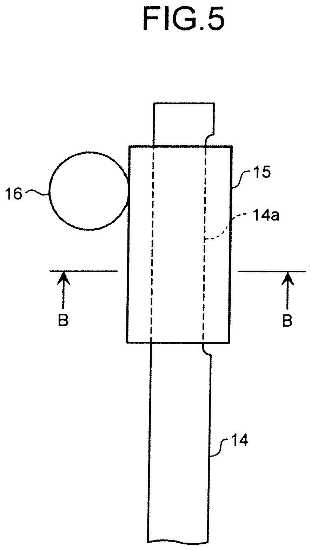

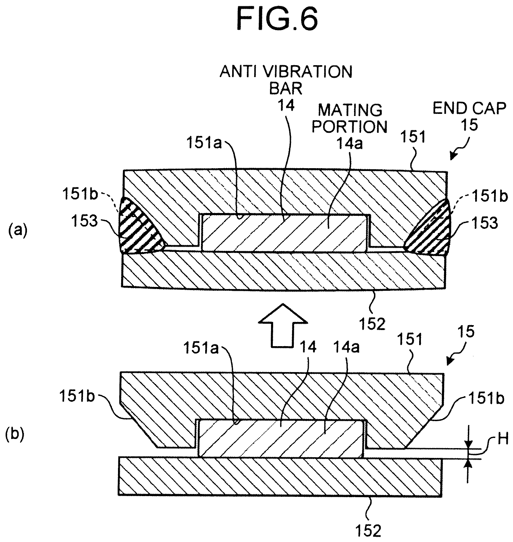

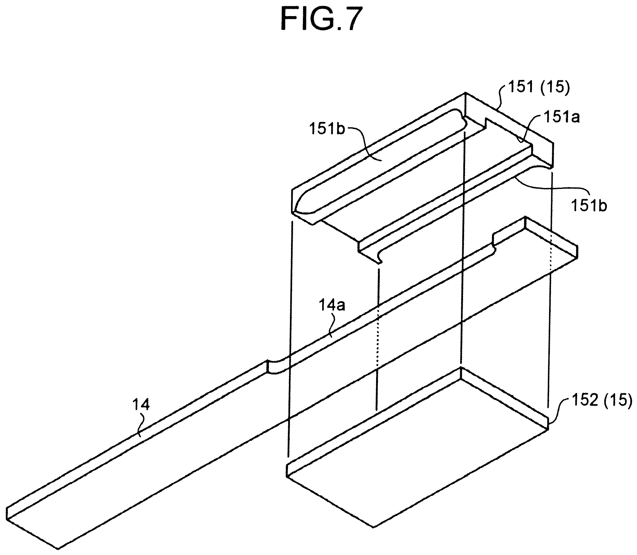

FIG. 5 is a plan view illustrating a dissimilar material joint structure according to the present embodiment. FIG. 6 is an enlarged cross-sectional view along the line B-B in FIG. 5. FIG. 7 is a perspective view illustrating a dissimilar joint structure according to the present embodiment.

In the dissimilar material joint structure according to the present embodiment, the joint between the anti vibration bar (first member) 14 and the end cap (second member) 15 is, as illustrated in FIGS. 5 to 7, achieved by sandwiching a site where the anti vibration bar 14 is to be joined to retaining bar 16 with a plurality of (in the present embodiment, 2) split end caps 151 and 152, and welding the respective end caps 151 and 152 together. Then, in this state, the end cap 15 and the retaining bar 16 are welded.

The anti vibration bar 14 is formed with a mating portion 14a that mates with the end cap 15 at a site where the anti vibration bar 14 is to be joined to the retaining bar 16, specifically, a site where the end cap 15 is to be joined. In the present embodiment, except for the tip of the anti vibration bar 14, the mating portion 14a is formed in a thinly constricted portion along the longitudinal direction of the anti vibration bar 14.

The end cap 151, which is one of the two members forming the end cap 15, is formed based on a plate block. A concave portion 151a with a long groove shape into which the mating portion 14a of the anti vibration bar 14 can be inserted is formed on one face of the end cap 151. The depth of this concave portion 151a is less than the thickness of the mating portion 14a. Further, both sides of the end cap 151 have a groove 151b formed in a tapered shape along the longitudinal direction of the concave portion 151a, which will serve as the welding sites to the other end cap 152. The other end cap 152 of the end cap 15 is formed in a plate shape.

As illustrated in FIG. 6(b), when joining the end cap 15 to the anti vibration bar 14, by inserting the mating portion 14a of the anti vibration bar 14 into the concave portion 151a of the end cap 151, and arranging the other end cap 152 on the side of the concave portion 151a, the mating portion 14a of the anti vibration bar 14 is sandwiched by the end cap 151 and the other end cap 152. At this point, since the depth of the concave portion 151a is less than the thickness of the mating portion 14a, the mating portion 14a sticks out from the concave portion 151a. Consequently, a gap H is produced between the groove 151b of the end cap 151 and the other end cap 152. Thus, as illustrated in FIG. 6(a), a weld material 153 is cladded to the groove 151b. Consequently, due to contraction of the weld material 153 during cooling, both sides of the joining part 151 on which the groove 151b is provided and both sides of the other joining part 152 facing the groove 151b are drawn together, so that the gap H narrows. Therefore, the mating portion 14a is sandwiched between the end cap 151 and the other joining part 152, whereby the anti vibration bar 14 and the end cap 15 are joined. Subsequently, the retaining bar 16, which is formed from the same material as the end cap 15, is welded in this state to the end cap 15.

Thus, the dissimilar material joint structure according to the present embodiment joins together an anti vibration bar (first member) 14 and a end cap (second member) 15, which are dissimilar metal materials, in which the anti vibration bar 14 is sandwiched by a plurality of end caps (second members) 151 and 152, and these respective end caps 151 and 152 are joined by a weld material 153.

According to this dissimilar material joint structure, due to contraction of the weld material 153 welding the respective end caps 151 and 152, the anti vibration bar 14 is sandwiched between one end cap 151 and the other end cap 152, whereby the anti vibration bar 14 and the end cap 15 are joined. Consequently, a thermal treatment for welding dissimilar metal materials is not required, and the welding operation can be carried out easily. Moreover, the joint between the anti vibration bar 14 and the end cap 15 is achieved by the anti vibration bar 14 being sandwiched between one end cap 151 and another end cap 152 due to contraction of the weld material 153. Therefore, the joint strength between the anti vibration bar 14 and the end cap 15, which are dissimilar metal materials, can be improved.

Further, the dissimilar material joint structure according to the present embodiment joins together a plurality of anti vibration bars 14 that are inserted among an array of a plurality of heat transfer tubes 5 and a retaining bar 16 that is formed from a dissimilar metal material to the anti vibration bar 14 and couples the respective anti vibration bars 14 together. This dissimilar material joint structure includes a plurality of end caps 15 (151 and 152) that are formed from the same material as the retaining bar 16. The site of the anti vibration bar 14 to be joined to the retaining bar 16 is sandwiched by the end caps 151 and 152. The respective end caps 151 and 152 are welded together, and then the end caps 151 and 152 and the retaining bar 16 are welded together.

According to this dissimilar material joint structure, due to contraction of the weld material 153 welding the respective end caps 151 and 152, the anti vibration bar 14 is sandwiched between one end cap 151 and the other end cap 152, whereby the anti vibration bar 14 and the end cap 15 are joined. Then, the end cap 15 and the retaining bar 16, which are the same metal material, are joined by welding in this state. Consequently, a thermal treatment for welding dissimilar metal materials is not required, and the welding operation can be carried out easily. Moreover, the joint between the anti vibration bar 14 and the end cap 15 is achieved by the anti vibration bar 14 being sandwiched between one end cap 151 and another end cap 152 due to contraction of the weld material 153. Therefore, the joint strength between the anti vibration bar 14 and the retaining bar 16, which are dissimilar metal materials, can be improved.

Further, it is preferred that the dissimilar material joint structure according to the present embodiment be provided with a mating portion 14a that is used to mate the anti vibration bar (first member) 14 with the end cap (second member) 15.

According to this dissimilar material joint structure, the joint between the anti vibration bar 14 and the end cap 15 can be made stronger by the mating of the mating portion 14a. In the present embodiment, although the mating portion 14a is described as being a constricted portion formed on the anti vibration bar 14, the present invention is not limited to this. For example, although not illustrated in the drawings, a through hole may be provided in the anti vibration bar 14, and a convex portion that is inserted into the through hole may be provided on the end cap 15.

### Industrial Applicability

Thus, the dissimilar material joint structure according to the present invention is suitable for improving the joint strength between dissimilar metal materials.

### Reference Signs List

- 5: heat transfer tube
- 14: anti vibration bar (first member)
- 14a: mating portion
- 15: end cap (second member)
- 151, 152: end cap
- 151a: concave portion
- 151b: groove
- 153: weld material
- 16: retaining bar
- 17: retainer bar
- H: gap

## Claims

1. A dissimilar material joint structure that joins together a plurality of anti vibration bars (14) that are inserted among an array of a plurality of heat transfer tubes (5) and retaining bars (16) which are formed from a dissimilar metal material to the anti vibration bars (14) and couples the anti vibration bars (14) together, a portion to be joined to the retaining bar (16) on the anti vibration bar (14) being sandwiched by a plurality of end caps (15),**characterized in that**:
the plurality of end caps (15) are formed from the same material as the retaining bar,
the respective end caps (15) are welded together, and
the end caps (15) and the retaining bar (16) are welded together.

2. The dissimilar material joint structure according to claim 1, wherein a mating portion (14a) that mutually mates the anti vibration bar (14) with the retaining bar (16) is provided.

## Patentansprüche

1. Verbindungsstruktur aus ungleichen Materialien, die mehrere Antivibrationsstäbe (14) miteinander verbindet, die zwischen einer Anordnung von mehreren Wärmeübertragungsrohren (5) und Haltestangen (16) eingesetzt sind, die aus einem zu den Antivibrationsstäben (14) ungleichen Metallmaterial gebildet sind, und die Antivibrationsstäbe (14) miteinander verbindet, wobei ein mit der Haltestange (16) zu verbindender Abschnitt auf dem Antivibrationsstab (14) sandwichartig durch mehrere Endkappen (15) angeordnet wird, **dadurch gekennzeichnet, dass**:
die mehreren Endkappen (15) aus dem gleichen Material wie die Haltestange gebildet sind,
die jeweiligen Endkappen (15) miteinander verschweißt werden, und
die Endkappen (15) und die Haltestange (16) miteinander verschweißt werden.

2. Verbindungsstruktur aus ungleichen Materialien nach Anspruch 1, wobei ein anpassender Abschnitt (14a), der den Antivibrationsstab (14) gegenseitig zur Haltestange (16) anpasst, vorgesehen ist.

## Revendications

1. Structure de joint de matériaux dissemblables qui assemble une pluralité de barres anti-vibration (14) qui sont insérées parmi un réseau d'une pluralité de tubes de transfert thermique (5) et de barres de retenue (16) qui sont formés à partir d'un matériau métallique dissemblable par rapport aux barres anti-vibration (14) et couple les barres anti-vibration (14) ensemble, une partie à assembler à la barre de retenue (16) sur la barre anti-vibration (14) étant prise en sandwich par une pluralité de capuchons d'extrémité (15), **caractérisée en ce que** :
la pluralité de capuchons d'extrémité (15) sont formés à partir du même matériau que la barre de retenue,
les capuchons d'extrémité (15) respectifs sont soudés ensemble, et
les capuchons d'extrémité (15) et la barre de retenue (16) sont soudés ensemble.

2. Structure de joint de matériaux dissemblables selon la revendication 1, comprenant une partie de couplage (14a) qui couple mutuellement la barre anti-vibration (14) avec la barre de retenue (16).
